# EUROPÄISCHE PATENTSCHRIFT

(11) **EP 0 934 544 B1**
(45) Veröffentlichungstag und Bekanntmachung des Hinweises auf die Patenterteilung: **10.04.2002**
(21) Anmeldenummer: 97911118.4
(22) Anmeldetag: 26.09.1997
(51) Int. Cl.: G02B 21/00, G02B 21/06

(54) **MIKROSKOP MIT EINEM ANNÄHERUNGSSENSOR**
MICROSCOPE WITH A PROXIMITY SENSOR
MICROSCOPE POURVU D'UN CAPTEUR DE PROXIMITE

(30) Priorität: 24.10.1996 DE 19643558
(43) Veröffentlichungstag der Anmeldung: 11.08.1999
(73) Patentinhaber: LEICA MIKROSKOPIE UND SYSTEME GmbH, D-35530 Wetzlar (DE)
(72) Erfinder: RÜHL, Helmut, D-35396 Giessen (DE); RENTZSCH, Wolfgang, D-35576 Wetzlar (DE)
(74) Vertreter: Stamer, Harald
(86) Internationale Anmeldenummer: DE9702218
(87) Internationale Veröffentlichungsnummer: WO9818036

(56) Entgegenhaltungen:
- EP-A- 0 043 133
- WO-A-94/07172
- WO-A-96/13743
- DE-A- 3 535 749
- DE-A- 4 202 505
- DE-A- 19 538 382
- US-A- 4 531 816
- US-A- 4 989 253
- US-A- 5 000 555

## Beschreibung

Die Erfindung betrifft ein Mikroskop gemäß dem Oberbegriff des Patentanspruchs 1.

Moderne Mikroskope zeichnen sich u.a. dadurch aus, daß die verschiedenen Mikroskopfunktionen elektrisch und/oder elektromotorisch steuerbar ausgebildet sind. So sind beispielsweise als elektrisch arbeitende Schalt- und Einstellfunktionen Autofokuseinrichtungen, motorische Einstellungen des Objekttisches, elektrisch schaltbare Blenden, Filter oder Phasenringe etc. bekannt. Ein Mikroskop bei dem diese Funktionen verwirklicht sind, ist beispielsweise in der DE 42 31 379 A1 beschrieben.

Bei diesem Mikroskop sind die Bedienelemente für die Schaltfunktionen in ergonomischer Art und Weise auf einem Bedienpult zusammengefaßt und müssen vom Beobachter manuell angewählt werden. Dies hat sich in der Praxis bewährt. Durch die Vielzahl der elektrisch steuerbaren Mikroskopfunktionen wird jedoch die Umgebung des Mikroskops und somit auch das zu beobachtende Objekt thermisch belastet. Insbesondere bei der Verwendung von Beleuchtungseinrichtungen mit sehr hohen Lampenleistungen, wie beispielsweise Gasentladungslampen, kann das Objekt durch die thermische Belastung beschädigt werden. Besonders empfindliche Objekte sind beispielsweise lebende Zellen oder auch Objekte in der Fluoreszenzmikroskopie, die durch hohe Beleuchtungsstärken zerstört werden können.

Der Beobachter ist in diesen Fällen gezwungen, die schaltbare Funktion über das Bedienfeld manuell zu deaktivieren bzw. zu schalten. In der Praxis hat es sich gezeigt, daß diese Vorgehensweise für viele Anwendungsfälle immer dann umständlich ist, wenn beispielsweise die Mikroskopfunktion kurzzeitig nicht benötigt wird.

Bei fotografischen Kameras ist es bekannt am oder im Sucher einen Sensor anzuordnen, der den gesamten Hauptstromkreis der Kamera in Abhängigkeit vom Einblick des Fotografen in den Kamerasucher aktiviert bzw. deaktiviert. Bei Kameras soll ausschließlich eine Schonung der Batterie erreicht werden.

Bei Mikroskopen darf der Hauptstromkreis auch nicht unterbrochen werden, da dies beim erneuten Aktivieren der Funktionen eine vollständige Neueinstellung des Mikroskops bedingen würde. Zusätzlich wird die Lebensdauer von Lampen durch häufiges Ein- und Ausschalten erheblich verringert.

Aus der WO 96/13743 A1 ist ein Mikroskop mit einem Sensor und einer Steuereinrichtung bekannt, bei dem die Mikroskopfunktionen berührungsfrei durch die Pupillenstellung des Beobachters steuerbar sind. Eine Einrichtung zur Erkennung der Pupillenposition ist mit einem Schaltglied ausgestattet, welches die Meßroutine unterbricht, sobald die Einrichtung zur Erkennung der Pupillenposition keine Pupille ausmachen kann.

Ferner ist aus der DE 44 46 185 A1 ein Laser-Scanmikroskop mit einem UV-Laser und mit einer Lichtleitfaser bekannt, bei dem die Schädigungen durch UV-Licht dadurch herabgesetzt werden, daß zwischen dem Laser und der Lichtleitfaser ein Scanshutter vorgesehen ist, der die Lichtleitfaser nur während des Scannens freigibt.

Ein Mikroskop gemäß dem Oberbegriff des Anspruchs 1 ist bereits aus EP-A-0 043 133 bekannt.

Es ist daher Aufgabe der vorliegenden Erfindung, ein bekanntes Mikroskop mit möglichst einfachen Mitteln derart weiterzubilden, daß unabhängig von der manuellen Bedienung durch eine Person, die elektrischen und/oder elektromotorischen Mikroskopfunktionen auch vollautomatisch ausführbar sind und dabei eine Schädigung von empfindlichen Objekten oder Beeinträchtigung der Bildqualität vermindert wird.

Diese Aufgabe wird erfindungsgemäß durch die im kennzeichnenden Teil des Patentanspruches 1 angegebenen Merkmale gelöst. Weitere vorteilhafte Weiterbildungen der Erfindung sind Gegenstand der Unteransprüche.

Die Anordnung eines Annäherungssensors am oder im Okular und dessen Verbindung mit der Steuereinrichtung ermöglicht eine vollautomatische Steuerung der Mikroskopfunktionen. Diese Funktionen werden immer dann ausgelöst, wenn der Benutzer in das Okular am Tubus Einblick nimmt, bzw. wenn kein Einblick erfolgt. Diese vollautomatische Steuerung hat sich insbesondere in der Fluoreszenzmikroskopie zum Ein- bzw. Ausschwenken einer Dunkelklappe in den Beleuchtungsstrahlengang bewährt. Dadurch wird ein allmähliches Ausbleichen des Objektes (Fading-Effekt) durch unnötige Beleuchtung vermieden.

Die Ausblendung des Beleuchtungslichtes durch eine Dunkelklappe oder durch Regulierung der Lampenspannung ist natürlich auch dann sinnvoll, wenn lebendes Gewebe bzw. Zellen mit dem Mikroskop beobachtet und/oder bearbeitet werden sollen.

Vorteilhafterweise wird der Annäherungssensor auch bei mikrofotografischen Aufnahmen verwendet. Dabei wird zur Vermeidung von Fremdlichteinfall durch das Okular eine Dunkelblende in den Beobachtungsstrahlengang eingeschwenkt. Natürlich ist es auch möglich einen Teilerspiegel über den Annäherungssensor und die Steuereinrichtung anzusteuern, so daß das gesamte vom Objekt kommende Licht für die fotografische Aufnahme genutzt werden kann.

Am Tubus des Mikroskops kann ein handelsüblicher, eine separate Baueinheit bildender Annäherungssensor verwendet werden. Der Annäherungssensor kann dabei als Lichttaster ausgebildet sein, wie z.B. als Reflexlichtschranke, Gabellichtschranke, passiver Infrarotmelder oder Ultraschallmelder. Selbstverständlich kann als Annäherungssensor auch ein berührungsempfindlicher Schalter verwendet werden.

Die Erfindung wird anhand eines Ausführungsbeispiels mit Hilfe der schematischen Zeichnung näher erläutert.

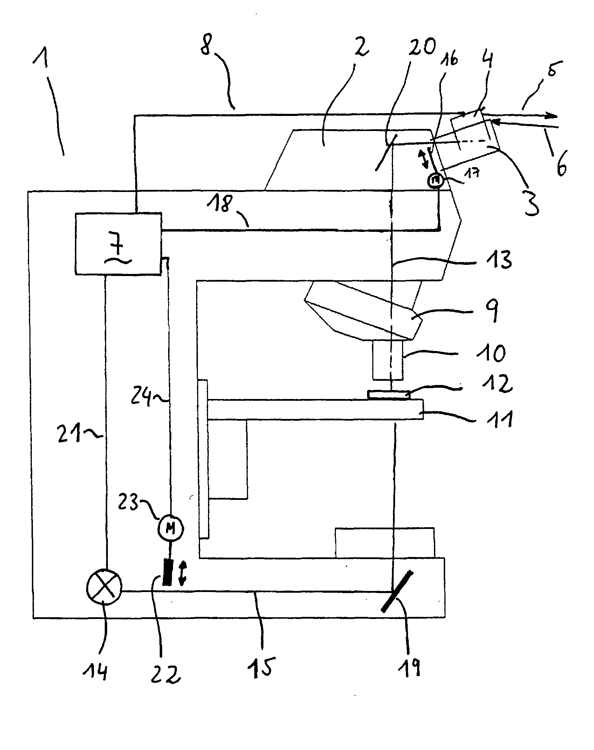

Die Figur zeigt ein Mikroskop 1 mit einem Tubus 2 und einem Okular 3. Das Mikroskop 1 weist ferner einen Objektivrevolver 9 mit einem Objektiv 10 und einen Mikroskoptisch 11 für das über einen Beobachtungsstrahlengang 13 zu beobachtende Objekt 12 auf. Das Objekt 12 wird über eine im Mikroskop 1 angeordnete Lichtquelle 14, den zugehörigen Beleuchtungsstrahlengang 15 und den Umlenkspiegel 19 beleuchtet. Die Lichtquelle 14 ist über eine Leitung 21 elektrisch mit einer Steuereinrichtung 7 verbunden.

Am Okular 3 ist ein Annäherungssensor 4 angeordnet, der IR-Strahlen 5 aussendet und reflektierte IR-Strahlen 6 wieder empfängt. Im Mikroskop 1 ist die Steuereinrichtung 7 angeordnet, die über eine elektrische Leitung 8 mit dem Annäherungssensor 4 verbunden ist.

Im Beobachtungsstrahlengang 13 ist zur Umlenkung des vom Objekt 12 kommenden Lichtes in das Okular 3 ein Prisma 20 vorgesehen. Zur Vermeidung von Fremdlichteinfall durch das Okular 3 ist ferner im Beobachtungsstrahlengang 13 ein Okularverschluss 16 angeordnet, der über einen Motor 17 bewegbar ausgebildet ist. Der Motor 17 ist über die Steuerleitung 18 an die Steuereinrichtung 7 angeschlossen.

Im Beleuchtungsstrahlengang 15 ist zur Ausblendung des von der Lichtquelle 14 kommenden Beleuchtungslichts eine schaltbare Dunkelklappe 22 vorgesehen, die über einen Motor 23 in Doppelpfeilrichtung bewegbar ausgebildet ist. Der Motor 23 ist über eine elektrische Leitung 24 mit der Steuereinrichtung 7 verbunden.

Der Annäherungssensor 4 sendet ständig IR-Strahlen 5 aus. Diese Strahlen 5 werden von einem nicht mit dargestellten Beobachter reflektiert, wenn dieser in das Okular 3 einblickt. Die reflektierten Strahlen 6 werden vom Annäherungssensor 4 wieder empfangen, wobei die Empfindlichkeit des Sensoreinganges für die reflektierten IR-Strahlen vorwählbar ausgebildet ist. Durch den Empfang von IR-Strahlen 6 wird vom Annäherungssensor 4 über die Steuerleitung 8 ein entsprechendes Signal abgegeben und in der Steuereinrichtung 7 registriert. In diesem Fall werden von der Steuereinrichtung 7 über die beiden Leitungen 18 und 24 entsprechende Signale an die beiden Stellmotore 17 und 23 abgegeben. Über den Motor 17 wird dann der Okularverschluss 16 aus dem Beobachtungsstrahlengang 13 geschwenkt.

Analog dazu wird außerdem die Dunkelklappe 22 über den Motor 23 aus dem Beleuchtungsstrahlengang 15 gebracht.

Werden vom Annäherungssensor 4 keine vom Beobachter reflektierte IR-Strahlen 6 empfangen, wird über die Steuereinrichtung 7 ein entsprechendes Signal ausgelöst und sowohl die Dunkelklappe 22 als auch der Okularverschluss 16 wieder in den jeweiligen Strahlengang eingebracht.

Bei der Verwendung von Glüh- bzw. Halogenlampen im Mikroskop 1 können diese über die elektrische Leitung 21 mit Strom beaufschlagt werden, so daß über die Steuereinrichtung 7 ein Dimmen der Lichtquelle 14 möglich ist. Wird vom Annäherungssensor 4 kein reflektiertes IR-Strahlen 6 empfangen, so wird die Lichtquelle 14 gedimmt. Bei einem Empfang von IR-Strahlen kann die Lampe 14 wieder mit der Arbeitsspannung bzw. dem Arbeitsstrom betrieben werden.

In dem beschriebenen Ausführungsbeispiel ist für die Beleuchtungseinrichtung die Betriebsart "Durchlicht" dargestellt und beschrieben. Selbstverständlich liegt es im Rahmen der Erfindung den Annäherungssensor bei Mikroskopen mit einer anderen Beleuchtungsart, wie z.B. Auflichtbeleuchtung oder einer kombinierten Auflicht-/Durchlichtbeleuchtung zu verwenden.

Um ein unnötiges häufiges Schalten beim Fehlen des empfangenden IR-Signals zu vermeiden, ist in der Steuereinrichtung eine einstellbare Zeitverzögerungslogik vorgesehen. Damit wird erreicht, daß die an die beiden Motore 17 und 23 abgegebenen Schaltimpulse erst nach Ablauf einer einstellbaren Zeitspanne abgegeben werden.

Es liegt natürlich im Rahmen der Erfindung, wenn weitere Mikroskopfunktionen, wie beispielsweise eine Autofokuseinrichtung, eine fotografische Einrichtung oder generell elektrische Verbraucher, über den Annäherungssensor und die Steuereinrichtung geschaltet werden.

### Bezugszeichenliste

- 1 -: Mikroskop
- 2 -: Tubus
- 3 -: Okular
- 4 -: Annäherungssensor
- 5 -: ausgesendete IR-Strahlen
- 6 -: reflektierte IR-Strahlen
- 7 -: Steuereinrichtung
- 8 -: elektrische Leitung 4 - 7
- 9 -: Objektivrevolver
- 10 -: Objektiv
- 11 -: Mikroskoptisch
- 12-: Objekt
- 13 -: Beobachtungsstrahlengang
- 14 -: Lichtquelle
- 15 -: Beleuchtungsstrahlengang
- 16 -: Okularverschluss
- 17 -: Motor
- 18 -: Steuerleitung 7- 17
- 19 -: Umlenkspiegel
- 20 -: Prisma
- 21 -: elektrische Leitung 7 - 14
- 22 -: Dunkelklappe
- 23 -: Motor
- 24 -: elektrische Leitung 7 - 23

## Patentansprüche

1. Mikroskop (1) mit einem Einblicktubus (2) zur visuellen Betrachtung eines Objektes (12) durch einen Beobachter, mit einer Steuereinrichtung (7) zur Ansteuerung elektrischer und/oder elektromotorischer Mikroskopfunktionen und mit einer Beleuchtungseinrichtung (14) zur Beleuchtung des zu beobachtenden Objektes (12), wobei die Steuereinrichtung (7) mit einem am Mikroskop (1) angebrachten und auf eine Annäherung des Beobachters an den Einblicktubus (2) ansprechenden Annäherungssensor (4) verbunden ist und die Steuereinrichtung (7) so ausgestaltet ist, daß auf Grund des Sensorsignals Mikroskopfunktionen, die einerseits für die Objektbeobachtung erforderlich sind, andererseits empfindliche Objekte durch Wärmeübertragung oder durch die Beleuchtungsstrahlung schädigen oder die Abbildung der Objekte beeinträchtigen können, entweder ausgeschaltet oder die Stärke ihrer Auswirkung auf das Objekt vermindert werden, **dadurch gekennzeichnet, daß** die Steuereinrichtung (7) mit einer Zeitverzögerungslogik derart ausgestattet ist, daß diese Mikroskopfunktionen erst dann geschaltet werden, nachdem der Beobachter die Beobachtungsposition für eine vorgegebenen Zeitspanne verlassen hat.

2. Mikroskop (1) nach Anspruch 1, **dadurch gekennzeichnet, daß** die Zeitverzögerungslogik der Steuereinrichtung (7) einstellbar ausgebildet ist.

3. Mikroskop (1) nach Anspruch 1 oder 2, **dadurch gekennzeichnet, daß** die Steuereinrichtung derart ausgestaltet ist, daß das Signal des Annährungssensors (4) die Beleuchtungsstärke der Beleuchtungseinrichtung (14) steuert und dabei entweder die Helligkeit der Lichtquelle der Beleuchtungseinrichtung (14) oder die Lage einer in den Beleuchtungsstrahlengang einbringbaren Dunkelklappe (22) steuert.

4. Mikroskop (1) nach Anspruch 1 oder 2, **dadurch gekennzeichnet, daß** die Steuereinrichtung (7) derart ausgestaltet ist, daß ein Okularverschluß aktiviert wird, der einen Fremdlichteinfall durch das Okular hindurch ausschließt.

5. Mikroskop (1) nach einem der Ansprüche 1 bis 4, **dadurch gekennzeichnet, daß** der Annäherungssensor (4) entweder als passiver Infrarotmelder oder als Ultraschallmelder oder als berührungsempfindlicher Schalter ausgebildet ist.

6. Mikroskop (1) nach einem der Ansprüche 1 bis 5, **dadurch gekennzeichnet, daß** das Mikroskop (1) als Fluoreszenzmikroskop ausgebildet ist und der Annäherungssensor (4) die Objektbeleuchtung durch das Anregungslicht steuert.

7. Mikroskop (1) nach einem der Ansprüche 1 bis 6, **dadurch gekennzeichnet, daß** die Steuereinrichtung derart ausgestaltet ist, daß das Signal des Annäherungssensors (4) die Lage eines Spiegels im Beobachtungsstrahlengang (13) steuert, der das Objektlicht alternativ entweder zu einer Foto- oder Fernsehkamera oder in den Einblicktubus (2) lenkt.

## Claims

1. Microscope (1) with a viewing tubus (2) for visual observation of an object (12) by an observer, with a control device (7) for control in drive of electrical and/or electromotorised microscope functions and with an illuminating device (14) for illuminating the object (12) to be observed, wherein the control device (7) is connected with a proximity sensor (4) mounted on the microscope (1) and responding to an approach of the observer to the viewing tubus (2) and the control device (7) is so designed that, on the basis of the sensor signal, microscope functions which are required on the one hand for object observation and on the other hand can damage sensitive objects by heat transmission or by illumination radiation or can impair the imaging of the objects are either switched off or the strength of their action on the object is reduced, **characterised in that** the control device (7) is equipped with a time delay logic means of such a kind that these microscope functions are switched only after the observer has left the observation position for a predetermined time period.

2. Microscope (1) according to claim 1, **characterised in that** the time delay logic means of the control device (7) is constructed to be adjustable.

3. Microscope (1) according to claim 1 or 2, **characterised in that** the control device is designed in such a manner that the signal of the proximity sensor (4) controls the illumination intensity of the illuminating device (14) and **in that** case controls either the brightness of the light source of the illuminating device (14) or the position of a dark screen introducible into the illuminating beam path.

4. Microscope (1) according to claim 1 or 2, **characterised in that** the control device is designed in such a manner that an eyepiece closure, which excludes incidence of extraneous light through the eyepiece, is activated.

5. Microscope (1) according to one of claims 1 to 4, **characterised in that** the proximity sensor (4) is constructed either as a passive infrared detector or as an ultrasound detector or as a contact-sensitive switch.

6. Microscope (1) according to one of claims 1 to 5, **characterised in that** the microscope (1) is constructed as a fluorescence microscope and the proximity sensor (4) controls the object illumination by the excitation light.

7. Microscope (1) according to one of claims 1 to 6, **characterised in that** the control device is designed in such a manner that the signal of the proximity sensor (4) controls the position of a mirror in the observation beam path (13), which deflects the object light alternatively either to a photographic or television camera or into the viewing tubus (2).

## Revendications

1. Microscope (1) avec un tube d'observation (2) pour l'observation visuelle d'un objet (12) par un observateur, avec un système de commande (7) pour la commande de fonctions électriques et/ou électromotrices du microscope et avec un système d'éclairage (14) pour l'éclairement de l'objet (12) à observer, où le système de commande (7) est relié à un capteur de proximité (4) prévu sur le microscope (1) et répondant à un rapprochement de l'observateur par rapport au tube d'observation (2) et le système de commande (7) est configuré de façon qu'en raison du signal du capteur, des fonctions du microscope, qui d'une part sont nécessaires pour l'observation d'un objet et d'autre part peuvent endommager des objets sensibles par transmission de chaleur ou bien par la trajectoire des rayons d'éclairement ou bien mal influencer la reproduction de l'objet, peuvent être soit mises hors circuit ou bien la force de leur effet sur l'objet peut être diminuée, **caractérisé en ce que** le système de commande (7) est équipé d'une logique retardatrice de façon que ces fonctions du microscope ne soient mises en circuit que lorsque l'observateur a quitté la position d'observation pendant un intervalle de temps prédéterminé.

2. Microscope (1) selon la revendication 1, **caractérisé en ce que** la logique retardatrice du système de commande (7) est configurée réglable.

3. Microscope (1) selon la revendication 1 ou 2, **caractérisé en ce que** le système de commande est configuré de façon que le signal du capteur de proximité (4) commande la force d'éclairement du système d'éclairage (14) et commande ainsi soit la clarté de la source de lumière du système d'éclairage (14) ou bien la position d'un cache (22) pouvant être mis dans la trajectoire des rayons d'éclairement.

4. Microscope (1) selon la revendication 1 ou 2, **caractérisé en ce que** le système de commande (7) est équipé de façon qu'un obturateur d'oculaire soit activé, qui exclut une arrivée de lumière étrangère à travers l'oculaire.

5. Microscope (1) selon l'une des revendications 1 à 4, **caractérisé en ce que** le capteur de proximité (4) est configuré soit en indicateur à infrarouges passifs ou indicateur à ultrasons ou commutateur sensible au contact.

6. Microscope (1) selon l'une des revendications 1 à 5, **caractérisé en ce que** le microscope (1) est configuré en tant que microscope à fluorescence et le capteur de proximité (4) commande l'éclairement de l'objet par la lumière d'excitation.

7. Microscope (1) selon l'une des revendications 1 à 6, **caractérisé en ce que** le système de commande est configuré de façon que le signal du capteur de proximité (4) commande la position d'un miroir dans la trajectoire des rayons d'observation (13), qui dévie la lumière de l'objet alternativement vers une caméra photo ou de télévision ou bien dans le tube d'observation (2).
